# EUROPEAN PATENT APPLICATION

(11) **EP 4 635 734 A1**
(43) Date of publication of application: **22.10.2025**
(21) Application number: 24784642.1
(22) Date of filing: 28.02.2024
(51) Int. Cl.: B32B 15/09

(54) **RESIN-COATED METAL PLATE AND METHOD FOR MANUFACTURING SAME**

(30) Priority: 06.04.2023 JP 2023062359
(71) Applicant: JFE Steel Corporation, Tokyo 100-0011 (JP)
(72) Inventor: KITAGAWA Junichi, Tokyo 100-0011 (JP); HIRAGUCHI Tomonari, Tokyo 100-0011 (JP); SASAKI Koichi, Tokyo 100-0011 (JP); YAMANAKA Yoichiro, Tokyo 100-0011 (JP)
(74) Representative: Grünecker Patent- und Rechtsanwälte PartG mbB
(86) International application number: PCT/JP2024/007442
(87) International publication number: WO 2024/209846

(57) **Abstract**

Provided is a resin-coated metal sheet that excels in adhesion, coverability, impact resistance after retort processing, and content extractability. The resin-coated metal sheet includes a metal sheet and a first resin coating layer composed of a biaxially stretched film containing polyester resin formed on one surface selected from front and back surfaces of the metal sheet. The polyester resin contains 90 mol% or more of ethylene terephthalate. The first resin coating layer has a peak intensity ratio I₁₇₂₅/I₁₆₁₅ of 0.50 to 0.65, which is a ratio of C=O peak intensity at 1725 ± 5 cm⁻¹ to C=C peak intensity at 1615 ± 5 cm⁻¹ obtained by Raman spectroscopy. The peak intensity ratio I₁₇₂₅/I₁₆₁₅ after subjecting the resin-coated metal sheet to retort processing at 130 °C for 90 min is 0.55 to 0.75. The first resin coating layer includes a wax-containing layer containing 0.1 mass% to 2.0 mass% of wax compound.

## Description

### TECHNICAL FIELD

The present disclosure relates to a resin-coated metal sheet used for can bodies and lids of food cans and beverage cans, and the like, and a method of producing same.

### BACKGROUND

Conventionally, metal sheets such as tin-free steel (TFS) and aluminum that are material for food cans have been painted to improve corrosion resistance, durability, weather resistance, and the like. However, the process of applying this paint not only involves complex baking treatment but also requires a significant amount of processing time and discharges a large amount of solvents, which poses problems.

To solve these problems, instead of a prepainted steel sheet, a resin-coated metal sheet (film-laminated metal sheet) was developed that is made by pressing a thermoplastic resin film onto a heated metal sheet. Resin-coated metal sheets are currently used industrially as material for food cans, beverage cans, and aerosol cans.

Such material requires not only basic properties such as adhesion and coverability but also properties related to impact resistance. Therefore, in conventional resin-coated metal sheets that have a resin coating layer containing polyester resin, new components have been added or film thickness has been increased to improve impact resistance.

Here, adhesion refers to a property of the resin coating layer not peeling off when formed into a container shape, and coverability refers to a property of no cracks occurring in the resin coating layer when forming from a blank to a can body, so that the underlying metal sheet does not become exposed. Further, impact resistance refers to an ability to prevent the resin coating layer from being damaged due to impacts such as dents during transportation.

For example, Patent Literature (PTL) 1 describes a film laminate of a resin layer (I) of crystalline polyester resin consisting of crystalline polyethylene terephthalate/crystalline polybutylene terephthalate and a resin layer (II) in which an olefin polymer is dispersed in the form of particulate having an average particle size of 3.0 µm to 5.0 µm in a polyester resin that has a melting point of 180 °C or more, and a further resin layer (III) consisting of a water-dispersible copolyester resin laminated on the side of the metal sheet bonded to the resin layer (II). Using this film, adhesion to the metal sheet and impact resistance are improved. Further, this film has a multilayer structure and the olefin polymer is dispersed in the polyester resin, and therefore excels in adhesion and formability. However, contact with contents such as food is not considered, leaving a problem of inferior content extractability.

Further, PTL 2 proposes the use of a polyester film in which at least two types of polyesters having different crystallinity, specifically a polyester mainly composed of PBT (I) and a polyester mainly composed of PET (II), are blended in a specific ratio at 130 °C for 15 min so that a thermal shrinkage rate is adjusted within a specific range. This polyester film can suppress the occurrence of shrinkage wrinkles during drying after adhesive layer application. Further, this polyester film also has excellent formability for cans, particularly in deep drawing and stretching forming, and also excels in thermal lamination with metal, impact resistance, and flavor and aroma retention. However, the polyester mainly composed of PBT (I) that has a melting point in a range from 200 °C to 223 °C is added in a mass ratio of 80 % to 40 %, and therefore the crystallization rate is fast. As a result, excessive crystallization of the film occurs due to a baking heat treatment after printing, leading to embrittlement of the film, making post-heating formability (coverability) insufficient.

PTL 3 describes a laminated metal sheet for two-piece cans, which includes a metal sheet, a first polyester resin layer formed on the surface of the metal sheet that will be the outer side of the container after forming, and a second polyester resin layer formed on the surface of the metal sheet that will be the inner side of the container after forming. In this laminated metal sheet, the first polyester resin layer contains 30 mass% or more and 60 mass% or less of a copolymer polyethylene terephthalate that has a content of polyethylene terephthalate or copolymer components of less than 6 mol%, and 40 mass% or more and 70 mass% or less of a copolymer polybutylene terephthalate that has a content of polybutylene terephthalate or copolymer components of less than 5 mol%, and a polyolefin wax in a ratio of 0.01 % or more and 3.0 % or less relative to the total composition. Further, the second polyester resin layer is a copolymer polyethylene terephthalate that has a content of copolymer components of less than 22 mol%. Further, the residual orientation degree of the first and second polyester resin layers is less than 30 %. According to this laminated metal sheet, the polyester resin layer formed on the surface of the metal sheet that will become the outer surface of the container after forming can suppress retort whitening. On the other hand, there is a risk that excessive crystallization of the film progresses due to retort processing, leading to embrittlement of the film, and improvement of impact resistance after retort processing was required.

### CITATION LIST

### Patent Literature

PTL 1: JP 2010-240985 A
PTL 2: JP 2009-221315 A
PTL 3: JP 2014-166856 A

### SUMMARY

### (Technical Problem)

As mentioned above, it is essential that the resin-coated metal sheet excels in adhesion and coverability required for materials for food cans. Further, in container applications, retort processing is carried out to pressurize, heat, and sterilize a beverage or food sealed inside the container, and it is also important that impact resistance after such retort processing is excellent. Further, in container applications, contents such as food being easy to extract leads to an increase in consumer purchasing motivation, and therefore excellent content extractability is also important.

Therefore, in view of such circumstances, it would be helpful to provide a resin-coated metal sheet that excels in adhesion, coverability, impact resistance after retort processing, and content extractability.

### (Solution to Problem)

The inventors have conducted intensive studies into means to solve the problems described above. As a result, it was found that in a resin-coated metal sheet obtained by coating a metal sheet with a biaxially stretched film composed of polyester resin, excellent adhesion, coverability, and impact resistance after retort processing can be achieved under the following conditions. That is, the polyester resin contains 90 mol% or more of ethylene terephthalate, and a peak intensity ratio I₁₇₂₅/I₁₆₁₅ of C=O peak intensity at 1725 ± 5 cm⁻¹ to C=C peak intensity at 1615 ± 5 cm⁻¹ measured by Raman spectroscopy after retort processing is in a specific range. Further, it was found that by providing a layer containing a defined amount of wax compound, a resin-coated metal sheet that has excellent content extractability can be obtained.

The present disclosure is based on these findings, and primary features of the present disclosure are as follows.
[1] A resin-coated metal sheet comprising a metal sheet and a first resin coating layer composed of a biaxially stretched film containing polyester resin formed on one surface selected from a front surface and a back surface of the metal sheet, wherein
   the polyester resin contains 90 mol% or more of ethylene terephthalate,
   the first resin coating layer:
      has a peak intensity ratio I₁₇₂₅/I₁₆₁₅ of 0.50 or more and 0.65 or less, which is a ratio of C=O peak intensity at 1725 ± 5 cm⁻¹ to C=C peak intensity at 1615 ± 5 cm⁻¹ obtained by Raman spectroscopy, measured with a laser polarization plane set to be perpendicular to the thickness direction of the first resin coating layer, wherein
      the peak intensity ratio I₁₇₂₅/I₁₆₁₅ after subjecting the resin-coated metal sheet to retort processing at 130 °C for 90 min is 0.55 or more and 0.75 or less; and
      comprises a wax-containing layer containing 0.1 mass% or more and 2.0 mass% or less of wax compound.
[2] The resin-coated metal sheet according to [1], wherein the first resin coating layer has a multilayer structure including at least an outermost layer and a lower layer, and the outermost layer is the wax-containing layer.
[3] The resin-coated metal sheet according to [1] or [2], further comprising a second resin coating layer containing polyester resin formed on the other surface selected from the front surface and the back surface of the metal sheet, wherein the second resin coating layer has a multilayer structure including at least an outermost layer and a lower layer, and a layer excluding the outermost layer of the second resin coating layer contains either titanium dioxide or a disazo organic pigment as a coloring pigment, or both.
[4] The resin-coated metal sheet according to any one of [1] to [3], wherein the wax compound is carnauba wax.
[5] A method of producing the resin-coated metal sheet according to any one of [1] to [4], the method comprising:
   under the following conditions (i) to (iii), a process of laminating the biaxially stretched film onto the metal sheet to obtain the first resin coating layer,
      (i) a surface temperature of the metal sheet at start of lamination is Tm °C or higher and (Tm + 40) °C or lower, where Tm is a melting point of the polyester resin in °C,
      (ii) a surface temperature of a laminate roller is Tg °C or higher and (Tg + 80) °C or lower, where Tg is a glass transition temperature of the polyester resin in °C,
      (iii) a contact time between the biaxially stretched film and the laminate roller is 10 ms or more and 30 ms or less; and
   a process of starting cooling within 2 s from completion of the laminating, and cooling until a surface temperature of the first resin coating layer is (Tg - 20) °C or more and Tg °C or less.

### (Advantageous Effect)

According to the present disclosure, it is possible to provide a resin-coated metal sheet that excels in adhesion, coverability, impact resistance after retort processing, and content extractability.

### DETAILED DESCRIPTION

Hereinafter, the resin-coated metal sheet according to an embodiment of the present disclosure is described in detail. First, a description is provided of the metal sheet used in an embodiment of the present disclosure.

As the metal sheet, an aluminum sheet, a mild steel sheet, or the like that is widely used as material for cans may be used. In particular, a surface-treated steel sheet on which a two-layer coating is formed that consists of a lower layer of metallic chromium and an upper layer of chromium hydroxide (hereinafter also referred to as TFS) is optimal. The coating weight of the TFS is not particularly limited. From the perspective of post-forming adhesion and corrosion resistance, in terms of Cr equivalent, the metallic chromium layer is preferably 70 mg/m² or more. The metallic chromium layer is preferably 200 mg/m² or less. The chromium hydroxide layer is preferably 10 mg/m² or more. The chromium hydroxide layer is preferably 30 mg/m² or less. Further, a thickness of the metal sheet is preferably 0.10 mm or more. The thickness is preferably 0.40 mm or less.

On one surface selected from the front surface and the back surface of the metal sheet, there is the first resin coating layer composed of a biaxially stretched film containing polyester resin. The following describes the first resin coating layer composed of the biaxially stretched film.

The first resin coating layer contains a polyester resin mainly composed of polyethylene terephthalate. To be mainly composed of polyethylene terephthalate means that 90 mol% or more of the structural units of the polyester are ethylene terephthalate. The content of ethylene terephthalate in the structural units of the polyester is preferably 92 mol% or more. The content of ethylene terephthalate in the structural units of the polyester is most preferably 100 mol%. When the content of ethylene terephthalate units is 90 mol% or more, the polyester resin becomes suitable for applications requiring heat resistance.

Terephthalic acid, as the acid component of polyethylene terephthalate, is essential for securing properties such as mechanical strength, heat resistance, and corrosion resistance. Further, by copolymerizing terephthalic acid with isophthalic acid, formability and other properties are improved. That is, by copolymerizing 2 mol% to 10 mol% of isophthalic acid component with the terephthalic acid component, deep drawing formability is improved, making the polyester resin suitable for high forming applications.

Further, within a range that does not impair the above properties, either another dicarboxylic acid component or a glycol component, or both, may be copolymerized. Examples of dicarboxylic acid components include aromatic dicarboxylic acids such as diphenylcarboxylic acid, 5-sodium sulfoisophthalic acid, and phthalic acid, aliphatic dicarboxylic acids such as oxalic acid, succinic acid, adipic acid, sebacic acid, dimer acid, maleic acid, fumaric acid, and cyclohexanedicarboxylic acid, and oxycarboxylic acids such as p-oxybenzoic acid. Further, examples of other glycol components include aliphatic glycols such as propanediol, butanediol, pentanediol, hexanediol, and neopentyl glycol, alicyclic glycols such as cyclohexanedimethanol, aromatic glycols such as bisphenol A and bisphenol S, diethylene glycol, and polyethylene glycol. Two or more of these dicarboxylic acid components and glycol components may be used in combination. Further, multifunctional compounds such as trimellitic acid, trimesic acid, and trimethylolpropane may be copolymerized as long as effects of the present disclosure are not adversely affected.

Further, the resin material used for the first resin coating layer is not limited by the method of production. For example, a method may be used to form the resin material by esterifying terephthalic acid, ethylene glycol, and copolymer components, and then subjecting the resulting reaction product to polycondensation to obtain a copolyester. Further, a method may be used to form the resin material by carrying out transesterification on dimethyl terephthalate, ethylene glycol, and copolymer components, and then subjecting the resulting reaction product to polycondensation to obtain a copolyester. In the production of copolyester, additives such as fluorescent whitening agents, antioxidants, thermal stabilizers, ultraviolet absorbers, and antistatic agents may be added as needed. When improving whiteness, the addition of fluorescent whitening agents is effective.

The first resin coating layer is a resin coating layer composed of a biaxially stretched film. The use of a biaxially stretched film is to improve canning properties by orienting the polyester molecules isotropically in the film plane. Further, the biaxially stretched film is advantageous in terms of film productivity and uniformity of film thickness.

It is important that the first resin coating layer has a peak intensity ratio I₁₇₂₅/I₁₆₁₅ of 0.50 or more and 0.65 or less, which is a ratio of C=O peak intensity at 1725 ± 5 cm⁻¹ to C=C peak intensity at 1615 ± 5 cm⁻¹ obtained by Raman spectroscopy, measured with a laser polarization plane set to be perpendicular to the thickness direction of the first resin coating layer (hereinafter also referred to as peak intensity ratio I₁₇₂₅/I₁₆₁₅).

That is, by having the peak intensity ratio I₁₇₂₅/I₁₆₁₅ of the first resin coating layer be 0.50 or more and 0.65 or less, it becomes possible to secure adhesion, coverability, and impact resistance after retort processing. The reasons for this are described below.

The peak intensity ratio I₁₇₂₅/I₁₆₁₅ is an indicator of the orientation state of PET molecular chains. When the peak intensity ratio I₁₇₂₅/I₁₆₁₅ is less than 0.50, the amount of amorphous material increases and the interaction between molecular chains decreases, leading to a degradation in impact resistance. Accordingly, the peak intensity ratio I₁₇₂₅/I₁₆₁₅ is 0.50 or more. The peak intensity ratio I₁₇₂₅/I₁₆₁₅ is preferably 0.53 or more. On the other hand, when the peak intensity ratio I₁₇₂₅/I₁₆₁₅ exceeds 0.65, the amount of amorphous material decreases, decreasing the flexibility of the first resin coating layer and potentially causing cracks, which degrades coverability (the ability to suppress exposure of the metal sheet) after forming. Accordingly, the peak intensity ratio I₁₇₂₅/I₁₆₁₅ is 0.65 or less. The peak intensity ratio I₁₇₂₅/I₁₆₁₅ is preferably 0.63 or less.

Further, it is important that the peak intensity ratio I₁₇₂₅/I₁₆₁₅ of the first resin coating layer after retort processing of the resin-coated metal sheet at 130 °C for 90 min (hereinafter also referred to as the post-retort processing peak intensity ratio I₁₇₂₅/I₁₆₁₅) is 0.55 or more and 0.75 or less. The conditions for retort processing are set to an ambient temperature of 130 °C in a retort sterilization furnace, holding at 130 °C for 90 min.

That is, the first resin coating layer is heated and crystallized by retort processing. Therefore, the peak intensity ratio I₁₇₂₅/I₁₆₁₅, which is an indicator of the orientation state of PET molecular chains, also changes due to retort processing. When the post-retort processing peak intensity ratio I₁₇₂₅/I₁₆₁₅ is less than 0.55, the amount of amorphous material increases, and the interaction between molecular chains decreases, leading to a degradation in impact resistance. Therefore, the post-retort processing peak intensity ratio I₁₇₂₅/I₁₆₁₅ is 0.55 or more. The post-retort processing peak intensity ratio I₁₇₂₅/I₁₆₁₅ is preferably 0.58 or more. On the other hand, when the post-retort processing peak intensity ratio I₁₇₂₅/I₁₆₁₅ exceeds 0.75, the amount of amorphous material decreases and embrittlement occurs, leading to a lack of adhesion and coverability. Therefore, the post-retort processing peak intensity ratio I₁₇₂₅/I₁₆₁₅ is 0.75 or less. The post-retort processing peak intensity ratio I₁₇₂₅/I₁₆₁₅ is preferably 0.72 or less.

The peak intensity ratio I₁₇₂₅/I₁₆₁₅ and the post-retort processing peak intensity ratio I₁₇₂₅/I₁₆₁₅ may be measured by the following method. Measurements are carried out using a Raman spectrometer LabRAM HR, produced by Horiba, Ltd., with an excitation light source of a semiconductor laser (λ = 532 nm), a microscope magnification of ×100, and an aperture diameter of 25 µm. The direction in which the laser polarization plane is perpendicular to the thickness direction of the resin coating layer is taken as the measurement direction, and the peak intensity ratio I₁₇₂₅/I₁₆₁₅ is determined as the ratio of the C=O peak intensity at 1725 ± 5 cm⁻¹ to the C=C peak intensity at 1615 ± 5 cm⁻¹. Here, the boundary between the metal sheet and the resin coating layer is taken as an initiation point (0 µm), and line analysis of the resin coating layer is carried out every 1 µm along the thickness direction from the initiation point. From each measurement, the smallest value obtained of the peak intensity ratio I₁₇₂₅/I₁₆₁₅ is taken as the minimum value of the peak intensity ratio I₁₇₂₅/I₁₆₁₅, and the largest value among the peak intensity ratios is taken as the maximum value of the peak intensity ratio I₁₇₂₅/I₁₆₁₅. Further, after retort processing of the resin-coated metal sheet at 130 °C for 90 min, the post-retort processing peak intensity ratio I₁₇₂₅/I₁₆₁₅ is determined using the same method. Further, regarding the upper and lower limits of the peak intensity ratio I₁₇₂₅/I₁₆₁₅ before and after the retort processing, the minimum value of the measurement results is the lower limit or more, and the maximum value of the measurement results is the upper limit or less.

Further, the first resin coating layer as a multilayer structure may have each layer having a different function. For example, the first resin coating layer may have a two-layer structure of the outermost layer (upper layer) and the lower layer, or a structure consisting of at least three layers: the outermost layer (upper layer), an intermediate layer (main layer), and a bottom layer (lower layer). There are preferably 3 or fewer layers. As an example of a multilayer structure in which each layer has a function, the outermost layer may contain wax to suppress the amount of wax in the first resin coating layer as a whole, thereby effectively controlling formability due to the wax. Further, by adding a larger amount of pigment to the intermediate layer in a multilayer structure, the color tone of the entire first resin coating layer may be controlled while securing formability and other properties. In such cases, the film thickness of the outermost layer and the bottom layer is preferably 1.0 µm or more. The film thickness of the outermost layer and the bottom layer is more preferably 1.5 µm or more. The film thickness of the outermost layer and the bottom layer is even more preferably 2.0 µm or more. On the other hand, the film thickness of the outermost layer and the bottom layer is preferably 5.0 µm or less. The film thickness of the outermost layer and the bottom layer is more preferably 4.0 µm or less. The film thickness of the outermost layer and the bottom layer is even more preferably 3.0 µm or less. Further, the film thickness of the intermediate layer is preferably 6 µm or more. The film thickness of the intermediate layer is more preferably 8 µm or more. The film thickness of the intermediate layer is even more preferably 10 µm or more. On the other hand, the film thickness of the intermediate layer is preferably 30 µm or less. The film thickness of the intermediate layer is more preferably 25 µm or less. The film thickness of the intermediate layer is even more preferably 20 µm or less. To achieve both whiteness and formability as a layer, the outermost layer and the bottom layer contains 0 % or more and 2 % or less of titanium dioxide, while the intermediate layer contains 10 % or more and 30 % or less of titanium dioxide.

The first resin coating layer includes a wax-containing layer containing 0.1 mass% to 2.0 mass% of wax compound. When the first resin coating layer is a single layer, the content of the wax compound in the first resin coating layer is 0.1 mass% to 2.0 mass%. In particular, when one surface is the inner surface after container forming, the first resin coating layer preferably has a multilayer structure including at least the outermost layer and the lower layer, with the outermost layer being the wax-containing layer in contact with contents. In this case, the wax compound is preferably 0.1 mass% to 2.0 mass% relative to the total amount of the outermost layer. The purpose of adding the wax compound is to decrease the surface free energy of the first resin coating layer on the inner surface of the container, making it difficult for contents to adhere to the first resin coating layer, thereby improving content extractability. The reason for limiting the amount of the wax compound added to 0.10 mass% or more is that when less than 0.10 mass%, the above effect becomes poor, and content extractability degrades. Further, the reason for limiting to 2.0 mass% or less is that exceeding 2.0 mass% is likely to degrade the adhesion between the multiple layers of the first resin coating layer, and also makes it difficult to form the first resin coating layer itself, resulting in decreased productivity.

As a component of the wax compound to be added, an organic lubricant or an inorganic lubricant may be used, among which carnauba wax, a natural wax derived from plants, is preferable. Polyester resin containing carnauba wax may be produced by mixing a defined amount of wax into polyester and then producing by a normal method. The wax content of the resin coating layer is the same value as the amount of wax added to the polyester resin.

Further, the first resin coating layer preferably has an intrinsic viscosity (IV) of 0.50 dl/g or more. The intrinsic viscosity is more preferably 0.52 dl/g or more. The intrinsic viscosity is even more preferably 0.55 dl/g or more. On the other hand, the first resin coating layer preferably has an intrinsic viscosity (IV) of 0.90 dl/g or less. The intrinsic viscosity is more preferably 0.80 dl/g or less. The intrinsic viscosity is even more preferably 0.75 dl/g or less. When the intrinsic viscosity of the first resin coating layer is 0.50 dl/g or more, the molecular weight of the first resin coating layer is high, and sufficient mechanical strength can be secured. On the other hand, when the intrinsic viscosity of the first resin coating layer is 0.90 dl/g or less, excellent film-forming properties are obtainable. The intrinsic viscosity (IV) of the first resin coating layer is adjustable by controlling polymerization conditions (amount of polymerization catalyst, polymerization temperature, polymerization time, and the like), by solid-phase polymerization under vacuum or an inert atmosphere such as nitrogen after melt polymerization, or the like.

Further, the other surface selected from the front and back surfaces of the metal sheet preferably has a second resin coating layer containing polyester resin. In particular, the second resin coating layer on the other surface preferably has a multilayer structure that includes at least an outermost layer and a lower layer. A layer excluding the outermost layer of the second resin coating layer preferably contains either titanium dioxide or disazo organic pigment as a coloring pigment, or both.

The number of layers in the second resin coating layer is not particularly limited. The second resin coating layer may have a two-layer structure consisting of the outermost layer (upper layer) and the lower layer, or a structure consisting of at least three layers including the outermost layer (upper layer), an intermediate layer (main layer), and a bottom layer (lower layer). There are preferably 3 or fewer layers. By limiting to three layers or fewer, the film formation cost can be suppressed.

In the second resin coating layer, the film thickness of the outermost layer and the bottom layer is preferably 1.0 µm or more. The film thickness of the outermost layer and the bottom layer is more preferably 1.5 µm or more. The film thickness of the outermost layer and the bottom layer is even more preferably 2.0 µm or more. On the other hand, the film thickness of the outermost layer and the bottom layer is preferably 5.0 µm or less. The film thickness of the outermost layer and the bottom layer is more preferably 4.0 µm or less. The film thickness of the outermost layer and the bottom layer is even more preferably 3.0 µm or less. Further, the film thickness of the intermediate layer is preferably 6 µm or more. The film thickness of the intermediate layer is more preferably 8 µm or more. The film thickness of the intermediate layer is even more preferably 10 µm or more. On the other hand, the film thickness of the intermediate layer is preferably 30 µm or less. The film thickness of the intermediate layer is more preferably 25 µm or less. The film thickness of the intermediate layer is even more preferably 20 µm or less.

For example, when the other surface is the outer surface after container forming, the second resin coating layer may be required to be gold or white to enhance the design during forming or printing processing. To provide a golden color with glitter property, as a coloring pigment, a disazo organic pigment is preferably contained. Disazo organic pigment exhibits a yellow color, but due to transparency, disazo organic pigment allows efficient acquisition of golden luster by utilizing the gloss of the metal sheet.

Typically, a method using oil-soluble dye is known as a method for applying highly transparent coloring. However, one of the disadvantages of these is migration (elution of color material from the colored resin). This is a phenomenon (bleeding) where oil-soluble dye is dissolved in the colored resin, and therefore rises to the surface of the resin coating layer when subjected to heating such as retort sterilization processing. However, disazo organic pigment typically exists as particles in the resin, which can significantly suppress migration.

As a yellow pigment, the application of disazo organic pigment is preferable, and among them, the use of C.I. Pigment Yellow 180 is particularly suitable. This is a pigment registered with the US Food and Drug Administration (FDA), excels in terms of safety, and can obtain excellent color tone. As an amount added relative to the total amount of the layer to which pigment is added, preferably 0.1 mass% or more is added. Preferably 20.0 mass% or less is added. When less than 0.1 mass%, color development is poor, and a desirable color tone is not obtainable. Conversely, when exceeding 20.0 mass%, transparency of the resin may be poor, resulting in a color tone lacking in luster. A particle size of the pigment is preferably less than 1 µm. When 1 µm or more, the transparency of the polyester resin may be lost, which is undesirable. Further, as a dispersant, metal salt of a higher fatty acid such as magnesium stearate may be used. Using a dispersant allows for a more uniform and highly transparent color tone to be obtained. The pigment content of the resin coating layer is the same value as the amount of pigment added to the polyester resin.

Aside from yellow pigment, adding white pigment can conceal the metallic luster of the substrate and enhance a printed surface, resulting in a good appearance. The added pigment needs to exhibit excellent design properties after container forming, and from this perspective, the use of titanium dioxide is suitable. Titanium dioxide is suitable because it has strong coloring power and good ductility, securing good design properties even after container forming. As an amount added relative to the total amount of the layer to which pigment is added, preferably 10.0 mass% or more is added. Preferably 30.0 mass% or less is added. When less than 10.0 mass%, color development is poor, and a desirable color tone is not obtainable. Conversely, when exceeding 30.0 mass%, the resin coating layer flexibility may be impaired, and may not be able to flex with the container forming.

When using the resin-coated metal sheet as a container, the resin-coated metal sheet may be formed so that the one surface is the inner side of the container and the other surface is the outer side of the container.

### [Production method]

The following describes a method of producing the resin-coated metal sheet according to an embodiment of the present disclosure. The method of producing the resin-coated metal sheet includes: a process of laminating a biaxially stretched film onto a metal sheet to obtain the first resin coating layer; and a process of starting cooling within 2 s from completion of the laminating, and cooling until a surface temperature of the first resin coating layer is (Tg - 20) °C or more and Tg °C or less. First, a method of obtaining a biaxially stretched film to be laminated on the metal sheet is described, with an example of the biaxially stretched film having a multilayer structure. Below, an example of the production method is illustrated.

After drying each polyester resin that will be material for each layer of the multilayer structure as needed, the polyester resin supplied to a conventional melt lamination extruder. The polyester resin is co-extruded into a sheet shape from a slit die installed in the extruder, and is adhered to a casting drum by a method such as electrostatic application, cooled, and solidified, thereby obtaining an unstretched sheet. By stretching the unstretched sheet in the longitudinal direction and the width direction of the film, a biaxially stretched film is obtained. The stretching ratio may be arbitrarily set according to the orientation, strength, elasticity, and the like of the film. In terms of film quality, a tenter method is preferred for the stretching method, and is preferably either a sequential biaxial stretching method that stretches in the longitudinal direction first and then in the width direction, or a simultaneous biaxial stretching method that stretches in both the longitudinal direction and the width direction approximately simultaneously.

The following describes a method of producing a resin-coated metal sheet by covering a metal sheet with the biaxially stretched film. According to the present disclosure, the metal sheet is heated to a temperature exceeding the melting point of the biaxially stretched film, and a method is used in which the film is brought into contact with one surface or both surfaces of the metal sheet using a pressure roller (hereinafter referred to as a laminate roller) to thermally fuse (hereinafter referred to as lamination).

The lamination conditions are appropriately set so that the resin coating layer specified in the present disclosure is obtained. First, taking the melting point of the polyester resin as Tm °C, the surface temperature of the metal sheet at the start of lamination needs to be Tm °C or more. Specifically, it is necessary to control the surface temperature of the metal sheet to be Tm °C or more and (Tm + 40) °C or less. By ensuring that the surface temperature of the metal sheet is Tm °C or more, the biaxially stretched film melts and wets the surface of the metal sheet, thereby securing good adhesion with the metal sheet. On the other hand, when the surface temperature of the metal sheet exceeds (Tm + 40) °C, the melting of the biaxially stretched film becomes excessive, raising a concern that the biaxially stretched film may adhere to the laminate roller. Further, controlling crystal structure (peak strength ratio) of the first resin coating layer within the range specified by the present disclosure becomes difficult. The surface temperature of the metal sheet is preferably (Tm + 25) °C or less. The surface temperature of the metal sheet is more preferably (Tm + 15) °C or less. When the biaxially stretched film is multilayered, the melting point of the biaxially stretched film as a whole is taken as Tm °C.

Further, in order to control the crystal structure (peak strength ratio) of the resin layer to an appropriate state, adjusting the surface temperature of the laminate roller is also necessary. Specifically, taking the glass transition temperature of the polyester resin as Tg °C, it is necessary to control the surface temperature of the laminate roller to be at least Tg °C and at most (Tg + 80) °C. By ensuring that the surface temperature of the laminate roller is at least Tg °C, the biaxially stretched film melts and wets the surface of the metal sheet, thereby securing good adhesion with the metal sheet. On the other hand, when the surface temperature of the laminate roll exceeds (Tg + 80) °C, the melting of the biaxially stretched film becomes excessive, raising a concern that the biaxially stretched film may adhere to the laminate roller. Further, controlling crystal structure (peak strength ratio) of the first resin coating layer within the range specified by the present disclosure becomes difficult. The surface temperature of the laminate roller is preferably (Tg + 40) °C or less. The surface temperature of the laminate roller is more preferably (Tg + 20) °C or less. When the biaxially stretched film is multilayered, the glass transition temperature of the biaxially stretched film as a whole is taken as Tg °C.

The glass transition temperature Tg °C and the melting point Tm °C may be measured by thermally analyzing the resin coating layer of the biaxially stretched film or the resin-coated metal sheet under a set of conditions including the following.
Measuring device: DSC Q100, produced by TA Instruments
Measurement temperature range: -50 °C to 290 °C
Heating rate: 10 °C/min
Atmosphere: nitrogen atmosphere, flow rate 50 m/min

Further, adjusting the contact time between the biaxially stretched film and the laminate roller is also an important factor. The contact time needs to be controlled to be 10 ms or more and 30 ms or less. By adjusting the contact time between the biaxially stretched film and the laminate roller in the above range, it is possible to achieve the crystal structure of the resin specified by the present disclosure.

The biaxially stretched film is preferably heated before laminating the resin layer onto the metal sheet. By pre-softening the biaxially stretched film through heating, the temperature distribution in a cross-section of the biaxially stretched film during lamination can be made more uniform. As a result, the crystal structure of the first resin coating layer will have a gradual structural change from the interface with the metal sheet to a surface layer, allowing for more uniform performance. Specifically, the temperature of the biaxially stretched film before lamination is preferably adjusted to be Tg °C or more and (Tg + 30) °C or less.

After the lamination is completed, it is necessary to promptly cool (quench) to fix the crystal structure of the resin layer. The cooling start time needs to be limited to 2 s or less from the completion of lamination. The cooling start time is preferably 1 s or less. On the other hand, the cooling start time is generally 0.5 s or more. Cooling is carried out until the surface temperature of the first resin coating layer is (Tg - 20) °C or more and Tg °C or less. That is, the cooling stop temperature is (Tg - 20) °C or more and Tg °C or less. Specifically, water cooling is applied to the resin-coated metal sheet immediately after lamination, controlling the water temperature to be (Tg - 20) °C or more and Tg °C or less, and cooling until the surface temperature of the first resin coating layer reaches that temperature range. Here, water cooling refers to cooling by bringing water into contact with the resin-coated metal sheet, and examples include misting, spraying, immersion in a water tank, and the like.

The second resin coating layer may also be obtained by the same method as that of the first resin coating layer described above. As a result, it is possible to produce the resin-coated metal sheet with the first resin coating layer on one surface and the second resin coating layer on the other surface.

For processes and conditions not described herein, regular methods may be used.

### EXAMPLES

The following describes Examples of the present disclosure.

### (Method of producing metal sheets)

Using a steel sheet that had a thickness of 0.22 mm and a width of 977 mm that had undergone cold rolling, annealing, and temper rolling, degreasing and pickling were carried out, followed by chromium plating to produce a chromium-plated steel sheet (TFS). Chromium plating was carried out electrolytically in a coating bath containing CrO₃, F⁻, and SO₄²⁻, followed by an intermediate rinse and chemical conversion treatment in a chemical conversion treatment liquid containing CrO₃ and F⁻. During the chemical conversion treatment, the electrolytic conditions (current density, electric charge, and the like) were adjusted to achieve a metal chromium coating weight and chromium hydroxide coating weight of 120 mg/m² and 15 mg/m², respectively, in terms of Cr equivalent.

### (Method of producing films for resin coating)

Polyester resins having the resin compositions listed in Table 1-1 were prepared, the amounts of wax listed in Table 1-1 were added, drying and melting were carried out according to a conventional method, then after coextruding from a T-die, cooling and solidifying on a cooling drum was carried out to obtain unstretched films. The obtained unstretched films were biaxially stretched and thermally fixed to obtain biaxially stretched films. In the resin for the inner surface of the container in Comparative Example 3, no wax was added.

For the obtained biaxially stretched films, thermal analysis was carried out using the method described above, and the glass transition temperature Tg °C and melting point Tm °C were examined. The results are listed in Table 1-1.

Polyester resins having the resin compositions listed in Table 1-2 were prepared, the amounts of coloring pigment listed in Table 1-2 were added, and biaxially stretched films were obtained using the method described above. The melting points of the obtained biaxially stretched films are listed in Table 1-2.

### [Table 1-1]

**Table 1-1**

| Classification | First resin coating layer (for container inner surface) | | | | | | | | | | | |
|---|---|---|---|---|---|---|---|---|---|---|---|---|
| | Entire resin coating layer | | | Outermost layer | | | Lower layer | | | Wax | | |
| | Structure | Thickness | Glass transition temp. Tg | Resin composition | Melting point | Thickness | Resin composition | Melting point | Thickness | Type | Layer with additives | Added amount |
| | | [µm] | [°C] | [mol%] | [°C] | [µm] | [mol%] | [°C] | [µm] | | | [mass%] |
| Example 1 | Single layer | 15.0 | 78 | - | - | - | PET 100 | 255 | 15.0 | Stearic acid | Lower layer | 0.9 |
| Example 2 | Single layer | 15.0 | 78 | - | - | - | PET 100 | 255 | 15.0 | Stearic acid | Lower layer | 0.9 |
| Example 3 | Double layer | 15.0 | 78 | PET 100 | 255 | 2.5 | PET 100 | 255 | 12.5 | Stearic acid | Outermost layer | 0.9 |
| Example 4 | Double layer | 15.0 | 78 | PET 100 | 255 | 2.5 | PET 100 | 255 | 12.5 | Stearic acid | Outermost layer | 0.9 |
| Example 5 | Double layer | 15.0 | 78 | PET 100 | 255 | 2.5 | PET 100 | 255 | 12.5 | Carnauba | Outermost layer | 0.1 |
| Example 6 | Double layer | 15.0 | 78 | PET 100 | 255 | 2.5 | PET 100 | 255 | 12.5 | Carnauba | Outermost layer | 2.0 |
| Example 7 | Double layer | 15.0 | 78 | PET 100 | 255 | 2.5 | PET 100 | 255 | 12.5 | Carnauba | Outermost layer | 0.9 |
| Example 8 | Double layer | 15.0 | 78 | PET 100 | 255 | 2.5 | PET 100 | 255 | 12.5 | Carnauba | Outermost layer | 0.9 |
| Example 9 | Double layer | 15.0 | 78 | PET 100 | 255 | 2.5 | PET 100 | 255 | 12.5 | Carnauba | Outermost layer | 0.9 |
| Example 10 | Double layer | 15.0 | 78 | PET 100 | 255 | 1.0 | PET 100 | 255 | 14.0 | Carnauba | Outermost layer | 0.9 |
| Example 11 | Double layer | 15.0 | 78 | PET 100 | 255 | 5.0 | PET 100 | 255 | 10.0 | Carnauba | Outermost layer | 0.9 |
| Example 12 | Double layer | 15.0 | 78 | PET 100 | 255 | 2.5 | PET 100 | 255 | 12.5 | Carnauba | Outermost layer | 0.9 |
| Example 13 | Double layer | 15.0 | 78 | PET 100 | 255 | 2.5 | PET 100 | 255 | 12.5 | Carnauba | Outermost layer | 0.9 |
| Example 14 | Double layer | 16.0 | 74 | PET 90 | 230 | 2.0 | PET 90 | 230 | 14.0 | Carnauba | Outermost layer | 0.9 |
| | | | | PEI 10 | | | PEI 10 | | | | | |
| Example 15 | Double layer | 16.0 | 75 | PET 95 | 240 | 2.0 | PET 95 | 240 | 14.0 | Carnauba | Outermost layer | 0.9 |
| | | | | PEI 5 | | | PEI 5 | | | | | |
| Comparative Example 1 | Double layer | 15.0 | 78 | PET 100 | 255 | 2.5 | PET 100 | 255 | 12.5 | Carnauba | Outermost layer | 0.9 |
| Comparative Example 2 | Double layer | 15.0 | 78 | PET 100 | 255 | 2.5 | PET 100 | 255 | 12.5 | Carnauba | Outermost layer | 0.9 |
| Comparative Example 3 | Double layer | 15.0 | 78 | PET 100 | 255 | 2.5 | PET 100 | 255 | 12.5 | - | - | 0.0 |
| Comparative Example 4 | Double layer | 15.0 | 78 | PET 100 | 255 | 2.5 | PET 100 | 255 | 12.5 | Stearic acid | Outermost layer | 0.9 |
| Comparative Example 5 | Double layer | 15.0 | 78 | PET 100 | 255 | 2.5 | PET 100 | 255 | 12.5 | Stearic acid | Outermost layer | 0.9 |
| Comparative Example 6 | Double layer | 15.0 | 78 | PET 100 | 255 | 2.5 | PET 100 | 255 | 12.5 | Stearic acid | Outermost layer | 0.9 |
| Comparative Example 7 | Double layer | 15.0 | 78 | PET 100 | 255 | 2.5 | PET 100 | 255 | 12.5 | Stearic acid | Outermost layer | 0.9 |
| Comparative Example 8 | Double layer | 15.0 | 78 | PET 100 | 255 | 2.5 | PET 100 | 255 | 12.5 | Stearic acid | Outermost layer | 0.9 |
| Comparative Example 9 | Double layer | 15.0 | 78 | PET 100 | 255 | 2.5 | PET 100 | 255 | 12.5 | Stearic acid | Outermost layer | 0.9 |
| Comparative Example 10 | Double layer | 15.0 | 78 | PET 100 | 255 | 2.5 | PET 100 | 255 | 12.5 | Stearic acid | Outermost layer | 0.9 |

### [Table 1-2]

**Table 1-2**

| Classification | Second resin coating layer (for container outer surface) | | | | | | | | | | | | | |
|---|---|---|---|---|---|---|---|---|---|---|---|---|---|---|
| | Resin coating layer | | Outermost layer | | | Intermediate layer | | | Lower layer | | | Coloring pigment | | |
| | Structure | Thickness | Resin composition | Melting point | Thickness | Resin composition | Melting point | Thickness | Resin composition | Melting point | Thickness | Type | Layer with additives | Added amount |
| | | [µm] | [mol%] | [°C] | [µm] | [mol%] | [°C] | [µm] | [mol%] | [°C] | [µm] | | | [mass%] |
| Example 1 | Single layer | 12.0 | - | - | - | PET 100 | 255 | 12 | - | - | - | C.I. Pigment Yellow 180 | Intermediate layer | 2.0 |
| Example 2 | Single layer | 12.0 | - | - | - | PET 100 | 255 | 12 | - | - | - | C.I. Pigment Yellow 180 | Intermediate layer | 2.0 |
| Example 3 | Single layer | 12.0 | - | - | - | PET 100 | 255 | 12 | - | - | - | C.I. Pigment Yellow 180 | Intermediate layer | 2.0 |
| Example 4 | Single layer | 12.0 | - | - | - | PET 100 | 255 | 12 | - | - | - | C.I. Pigment Yellow 180 | Intermediate layer | 2.0 |
| Example 5 | Single layer | 12.0 | - | - | - | PET 100 | 255 | 12 | - | - | - | C.I. Pigment Yellow 180 | Intermediate layer | 2.0 |
| Example 6 | Single layer | 12.0 | - | - | - | PET 100 | 255 | 12 | - | - | - | C.I. Pigment Yellow 180 | Intermediate layer | 2.0 |
| Example 7 | Double layer | 12.0 | PET 100 | 255 | 2 | PET 100 | 255 | 10 | - | - | - | C.I. Pigment Yellow 180 | Intermediate layer | 2.0 |
| Example 8 | Double layer | 12.0 | PET 100 | 255 | 2 | PET 100 | 255 | 10 | - | - | - | C.I. Pigment Yellow 180 | Intermediate layer | 2.0 |
| Example 9 | Double layer | 12.0 | PET 100 | 255 | 2 | PET 100 | 255 | 10 | - | - | - | C.I. Pigment Yellow 180 | Intermediate layer | 0.1 |
| Example 10 | Double layer | 12.0 | PET 100 | 255 | 2 | PET 100 | 255 | 10 | - | - | - | C.I. Pigment Yellow 180 | Intermediate layer | 5.0 |
| Example 11 | Double layer | 12.0 | PET 100 | 255 | 2 | PET 100 | 255 | 10 | - | - | - | C.I. Pigment Yellow 180 | Intermediate layer | 5.0 |
| Example 12 | Double layer | 12.0 | PET 100 | 255 | 2 | PET 100 | 255 | 10 | - | - | - | C.I. Pigment Yellow 180 | Intermediate layer | 2.0 |
| Example 13 | Double layer | 12.0 | PET 100 | 255 | 2 | PET 100 | 255 | 10 | - | - | - | C.I. Pigment Yellow 180 | Intermediate layer | 2.0 |
| Example 14 | Triple layer | 14.0 | PET 90 | 230 | 2 | PET 90 | 230 | 10 | PET 90 | 230 | 2 | Titanium dioxide | Intermediate layer | 20.0 |
| | | | PEI 10 | | | PEI 10 | | | PEI 10 | | | | | |
| Example 15 | Triple layer | 14.0 | PET 95 | 240 | 2 | PET 95 | 230 | 10 | PET 95 | 240 | 2 | Titanium dioxide | Intermediate layer | 20.0 |
| | | | PEI 5 | | | PEI 5 | | | PEI 5 | | | | | |
| Comparative Example 1 | Double layer | 12.0 | PET 100 | 255 | 2 | PET 100 | 255 | 10 | - | - | - | C.I. Pigment Yellow 180 | Intermediate layer | 2.0 |
| Comparative Example 2 | Double layer | 12.0 | PET 100 | 255 | 2 | PET 100 | 255 | 10 | - | - | - | C.I. Pigment Yellow 180 | Intermediate layer | 2.0 |
| Comparative Example 3 | Double layer | 12.0 | PET 100 | 255 | 2 | PET 100 | 255 | 10 | - | - | - | C.I. Pigment Yellow 180 | Intermediate layer | 2.0 |
| Comparative Example 4 | Double layer | 12.0 | PET 100 | 255 | 2 | PET 100 | 255 | 10 | - | - | - | C.I. Pigment Yellow 180 | Intermediate layer | 2.0 |
| Comparative Example 5 | Double layer | 12.0 | PET 100 | 255 | 2 | PET 100 | 255 | 10 | - | - | - | C.I. Pigment Yellow 180 | Intermediate layer | 2.0 |
| Comparative Example 6 | Double layer | 12.0 | PET 100 | 255 | 2 | PET 100 | 255 | 10 | - | - | - | C.I. Pigment Yellow 180 | Intermediate layer | 2.0 |
| Comparative Example 7 | Double layer | 12.0 | PET 100 | 255 | 2 | PET 100 | 255 | 10 | - | - | - | C.I. Pigment Yellow 180 | Intermediate layer | 2.0 |
| Comparative Example 8 | Double layer | 12.0 | PET 100 | 255 | 2 | PET 100 | 255 | 10 | - | - | - | C.I. Pigment Yellow 180 | Intermediate layer | 2.0 |
| Comparative Example 9 | Double layer | 12.0 | PET 100 | 255 | 2 | PET 100 | 255 | 10 | - | - | - | C.I. Pigment Yellow 180 | Intermediate layer | 2.0 |
| Comparative Example 10 | Double layer | 12.0 | PET 100 | 255 | 2 | PET 100 | 255 | 10 | - | - | - | C.I. Pigment Yellow 180 | Intermediate layer | 2.0 |

### (Method of producing resin-coated metal sheets)

Using a thermal press lamination device, the biaxially stretched films were laminated onto the chromium plated steel sheets according to the conditions listed in Table 2, and then cooled. That is, the biaxially stretched films for the inner surface of a container were laminated onto one surface of the chromium-plated steel sheets to form the first resin coating layer, and the biaxially stretched films for the outer surface of a container were laminated onto the other surface of the chromium-plated steel sheet to form the second resin coating layer.

The laminate roller was internally water-cooled, and by circulating coolant within the roller, temperature control during film adhesion was achieved. The temperature of the biaxially stretched films before lamination, when the glass transition temperature of the biaxially stretched film is Tg °C, was set to be Tg °C or more and (Tg + 30) °C or less, aiming for uniform temperature distribution within biaxially stretched film cross-sections. Subsequently, water cooling was carried out using a metal strip cooling device to produce the resin-coated metal sheets.

### (Resin-coated metal sheet evaluation)

The properties of the obtained resin-coated metal sheets were evaluated using the methods shown below. Further, for the first resin coating layer, the peak strength ratio I₁₇₂₅/I₁₆₁₅ was determined before and after retort processing using the method described above. The evaluation results are listed in Table 2.

### [Adhesion]

From the resin-coated metal sheets, test pieces were cut out in sizes of 120 mm in the machine direction and 30 mm in the transverse direction, and the first resin coating layer was partially peeled off from a long edge side end of each test piece on the can inner surface side (the one surface). Each peeled off first resin coating layer was opened up in the opposite direction to the chromium-plated steel sheet from which it was peeled (angle: 180°), and peel testing was carried out at a tensile speed of 30 mm/min using a tensile testing machine, evaluating the adhesion force per 15 mm in width. The target for evaluation was the film on the inner surface of the can. When this adhesion force is 5 N/15 mm or more, the adhesion between the film and the metal sheet is maintained even under strong forming such as drawing. On the other hand, when the adhesion force is less than 5 N/15 mm, there is a possibility that the first resin coating layer may peel off under conditions of further forming strength, such as drawing and ironing.

### [Adhesion evaluation criteria]

⊚: 8 N/15 mm or more
O: 5 N/15 mm or more and less than 8 N/15 mm
Δ: 2 N/15 mm or more and less than 5 N/15 mm
×: less than 2 N/15 mm

### [Coverability]

Using the following method, cans were produced from the resin-coated metal sheets, and the coverability of the first resin coating layer was evaluated. For each of the resin-coated metal sheets, after applying wax to both sides, a disc having a diameter of 165 mm was blanked out, obtaining a shallow drawn can with a drawing ratio of 1.50. Subsequently, re-drawing was performed on the shallow drawn can with drawing ratios of 1.80 and 2.00. The first resin coating layer at the upper end of the inner surface side of the obtained can was partially removed to expose the surface of the metal sheet (chromium-plated steel sheet). Then, at a position 10 mm below the opening of the can, a sponge having a diameter of about 8 mm containing an electrolyte solution (1 mass% NaCl aqueous solution) was placed in the machine direction (MD) and transverse direction (TD) of the metal sheet. A platinum electrode was brought into contact with the sponge to serve as the cathode, and the upper end of the can body (the exposed metal sheet part) was used as the anode. Subsequently, a voltage of 6.2 V was applied between the platinum electrode and the can body, and the current value was measured after 4 s.

The smaller the current value, the less the exposure of the metal sheet, and a small value means that the first resin coating layer has excellent coverability. Specifically, when the current value is less than 0.1 mA, the first resin coating layer sufficiently covers the metal sheet, and therefore corrosion can be suppressed even when used as a can for typical food such as salmon, seasoning, and the like. On the other hand, when the current value is 0.1 mA or more, the coverage of the metal sheet by the first resin coating layer is insufficient, raising concerns that corrosion cannot be suppressed even when used as a can for typical food such as salmon and seasonings.

### [Coverability evaluation criteria]

⊚: current value of less than 0.01 mA
O: current value of 0.01 mA or more and less than 0.1 mA
△: current value of 0.1 mA or more and less than 1 mA
×: current value of 1 mA or more

### [Impact resistance after retort processing]

For each of the resin-coated metal sheets, after applying wax to both sides, a disc having a diameter of 165 mm was blanked out, producing a shallow drawn can with a drawing ratio of 1.50. Subsequently, re-drawing was performed on the shallow drawn can with drawing ratios of 1.80 and 2.00. Retort processing at 130 °C for 90 min was carried out on the drawn can. Subsequently, dent testing (indenter 1/4 inch, weight 1000 g, drop height 100 mm) was carried out on the can body central portion inner surface, and the impact resistance of the dented portion of the can inner surface was evaluated. That is, a portion of the first resin coating layer on the inner surface of the upper end of the can was removed to expose the surface of the metal sheet. After that, a sponge that had a diameter of about 8 mm containing an electrolyte (1 mass% NaCl aqueous solution) was placed in the dented portion of the can inner surface. A platinum electrode was brought into contact with the sponge to serve as the cathode, and the upper end of the can body (the exposed metal sheet part) was used as the anode. Subsequently, a voltage of 6.2 V was applied between the platinum electrode and the can body, and the current value was measured after 4 s. The evaluation based on the current value is the same as the coverability evaluation criteria described above, but the smaller the current value, the less likely surface defects occur even when the can body is dented due to collisions with foreign objects during transport, indicating excellent impact resistance. Specifically, when the current value is less than 0.1 mA, surface defects are less likely to occur even in the case of a collision with a foreign object. On the other hand, when the current value is 0.1 mA or more, surface defects may occur due to collisions with foreign objects, raising concerns about initiation points of corrosion.

### [Impact resistance evaluation criteria]

⊚: current value of less than 0.01 mA
O: current value of 0.01 mA or more and less than 0.1 mA
△: current value of 0.1 mA or more and less than 1 mA
×: current value of 1 mA or more

### [Content extractability]

The resin-coated metal sheets after lamination were formed into cups using a deep drawing process with a blank diameter of 100 mm and a drawing ratio (pre-forming diameter/post-forming diameter) of 1.88. Subsequently, salted meat for luncheon meat (protein content in solid: 60 mass%) was filled into the cup, and after tightening the lid, retort sterilization processing (130 °C, 90 min) was carried out. Subsequently, the lid was removed, and when the cup was turned upside down to extract the contents, the degree of remaining contents inside the cup was observed to evaluate the ease of extraction of the contents.

### [Extractability evaluation]

⊚: The contents can be extracted just by turning the cup upside down (without shaking by hand), and when the inner surface of the cup is observed with the naked eye after extraction, almost no residue is visible.
O: Although contents remain inside the cup just by turning the cup upside down, the contents can be extracted by shaking the cup up and down (performing actions such as shaking the cup by hand). When the inner surface of the cup is observed with the naked eye after extraction, almost no residue is visible.
×: The contents are difficult to extract just by shaking the cup up and down (performing actions like shaking the cup by hand). By either drastically increasing the speed of shaking up and down or using a tool like a spoon to forcibly extract the contents, when the inner surface of the cup is observed with the naked eye, a significant amount of residue is clearly visible.

### [Table 2]

**Table 2**

| Classification | Laminating conditions | | | Cooling conditions | | Raman peak intensity ratio (first resin coating layer) | | | | Evaluation result | | | |
|---|---|---|---|---|---|---|---|---|---|---|---|---|---|
| | Metal sheet surface temp. at lamination start | Laminate roller surface temp. | Laminate roller contact time | Time until cooling starts after lamination | Cooling stop temp. | Before retort | | After retort | | Adhesion | Coverability | Impact resistance | Content extractability |
| | | | | | | I₁₇₂₅/I₁₆₁₅ | | I₁₇₂₅/I₁₆₁₅ | | | | | |
| | [°C] | [°C] | [ms] | [s] | [°C] | Maximum value | Minimum value | Maximum value | Minimum value | | | | |
| Example 1 | 280 | 110 | 20 | 1 | 75 | 0.60 | 0.50 | 0.68 | 0.55 | ⊚ | ⊚ | ⊚ | ⊚ |
| Example 2 | 260 | 110 | 20 | 1 | 75 | 0.65 | 0.58 | 0.75 | 0.69 | ⊚ | ⊚ | ⊚ | ⊚ |
| Example 3 | 275 | 110 | 20 | 1 | 75 | 0.61 | 0.53 | 0.70 | 0.58 | ⊚ | ⊚ | ⊚ | ⊚ |
| Example 4 | 275 | 110 | 20 | 1 | 75 | 0.61 | 0.53 | 0.70 | 0.58 | ⊚ | ⊚ | ⊚ | ⊚ |
| Example 5 | 275 | 110 | 20 | 1 | 75 | 0.61 | 0.53 | 0.70 | 0.58 | ⊚ | ⊚ | ⊚ | ○ |
| Example 6 | 275 | 110 | 20 | 1 | 75 | 0.61 | 0.53 | 0.70 | 0.58 | ⊚ | ⊚ | ⊚ | ⊚ |
| Example 7 | 270 | 110 | 20 | 1 | 75 | 0.63 | 0.55 | 0.72 | 0.61 | ⊚ | ⊚ | ⊚ | ⊚ |
| Example 8 | 270 | 110 | 20 | 1 | 75 | 0.63 | 0.55 | 0.72 | 0.61 | ⊚ | ⊚ | ⊚ | ⊚ |
| Example 9 | 270 | 110 | 20 | 1 | 75 | 0.63 | 0.55 | 0.72 | 0.61 | ⊚ | ⊚ | ⊚ | ⊚ |
| Example 10 | 270 | 110 | 20 | 1 | 75 | 0.63 | 0.55 | 0.72 | 0.61 | ⊚ | ⊚ | ⊚ | ⊚ |
| Example 11 | 270 | 110 | 20 | 1 | 75 | 0.63 | 0.55 | 0.72 | 0.61 | ⊚ | ⊚ | ⊚ | ⊚ |
| Example 12 | 270 | 110 | 20 | 1 | 65 | 0.64 | 0.56 | 0.74 | 0.70 | ⊚ | ⊚ | ⊚ | ⊚ |
| Example 13 | 270 | 110 | 20 | 1 | 55 | 0.65 | 0.57 | 0.75 | 0.71 | ⊚ | ⊚ | ⊚ | ⊚ |
| Example 14 | 250 | 90 | 20 | 1 | 70 | 0.61 | 0.52 | 0.65 | 0.56 | ⊚ | ⊚ | ⊚ | ⊚ |
| Example 15 | 255 | 90 | 20 | 1 | 70 | 0.63 | 0.56 | 0.71 | 0.60 | ⊚ | ⊚ | ⊚ | ⊚ |
| Comparative Example 1 | 290 | 110 | 20 | 1 | 80 | 0.55 | 0.48 | 0.61 | 0.54 | ⊚ | ⊚ | × | ⊚ |
| Comparative Example 2 | 255 | 110 | 20 | 1 | 50 | 0.66 | 0.60 | 0.77 | 0.71 | × | × | ⊚ | ⊚ |
| Comparative Example 3 | 275 | 110 | 20 | 1 | 75 | 0.61 | 0.53 | 0.70 | 0.58 | ⊚ | ⊚ | ⊚ | × |
| Comparative Example 4 | 275 | 160 | 20 | 1 | 75 | 0.48 | 0.43 | 0.54 | 0.48 | ⊚ | ⊚ | × | ⊚ |
| Comparative Example 5 | 275 | 60 | 20 | 1 | 75 | 0.67 | 0.61 | 0.79 | 0.72 | × | × | ⊚ | ⊚ |
| Comparative Example 6 | 275 | 110 | 5 | 1 | 75 | 0.68 | 0.62 | 0.79 | 0.73 | × | × | ⊚ | ⊚ |
| Comparative Example 7 | 275 | 110 | 35 | 1 | 75 | 0.57 | 0.50 | 0.60 | 0.53 | ⊚ | ⊚ | × | ⊚ |
| Comparative Example 8 | 275 | 110 | 20 | 3 | 75 | 0.65 | 0.60 | 0.77 | 0.71 | × | × | ⊚ | ⊚ |
| Comparative Example 9 | 250 | 110 | 20 | 1 | 44 | 0.72 | 0.66 | 0.83 | 0.77 | × | × | ⊚ | ⊚ |
| Comparative Example 10 | 300 | 110 | 20 | 1 | 88 | 0.45 | 0.44 | 0.51 | 0.49 | ⊚ | ⊚ | × | ⊚ |

As indicated in Table 2, the resin-coated metal sheet according to the present disclosure has excellent adhesion, coverability, impact resistance after retort processing, and content extractability. The resin-coated metal sheet according to the present disclosure is therefore particularly suitable as a material for containers.

### INDUSTRIAL APPLICABILITY

The container resin-coated metal sheet according to the present disclosure can be suitably used as a material for containers such as food cans, beverage cans, lids, and the like.

## Claims

1. A resin-coated metal sheet comprising a metal sheet and a first resin coating layer composed of a biaxially stretched film containing polyester resin formed on one surface selected from a front surface and a back surface of the metal sheet, wherein
the polyester resin contains 90 mol% or more of ethylene terephthalate,
the first resin coating layer:
has a peak intensity ratio I₁₇₂₅/I₁₆₁₅ of 0.50 or more and 0.65 or less, which is a ratio of C=O peak intensity at 1725 ± 5 cm⁻¹ to C=C peak intensity at 1615 ± 5 cm⁻¹ obtained by Raman spectroscopy, measured with a laser polarization plane set to be perpendicular to the thickness direction of the first resin coating layer, wherein
the peak intensity ratio I₁₇₂₅/I₁₆₁₅ after subjecting the resin-coated metal sheet to retort processing at 130 °C for 90 min is 0.55 or more and 0.75 or less; and
comprises a wax-containing layer containing 0.1 mass% or more and 2.0 mass% or less of wax compound.

2. The resin-coated metal sheet according to claim 1, wherein the first resin coating layer has a multilayer structure including at least an outermost layer and a lower layer, and the outermost layer is the wax-containing layer.

3. The resin-coated metal sheet according to claim 1 or 2, further comprising a second resin coating layer containing polyester resin formed on the other surface selected from the front surface and the back surface of the metal sheet, wherein the second resin coating layer has a multilayer structure including at least an outermost layer and a lower layer, and a layer excluding the outermost layer of the second resin coating layer contains either titanium dioxide or a disazo organic pigment as a coloring pigment, or both.

4. The resin-coated metal sheet according to any one of claims 1 to 3, wherein the wax compound is carnauba wax.

5. A method of producing the resin-coated metal sheet according to any one of claims 1 to 4, the method comprising:
under the following conditions (i) to (iii), a process of laminating the biaxially stretched film onto the metal sheet to obtain the first resin coating layer,
(i) a surface temperature of the metal sheet at start of lamination is Tm °C or higher and (Tm + 40) °C or lower, where Tm is a melting point of the polyester resin in °C,
(ii) a surface temperature of a laminate roller is Tg °C or higher and (Tg + 80) °C or lower, where Tg is a glass transition temperature of the polyester resin in °C,
(iii) a contact time between the biaxially stretched film and the laminate roller is 10 ms or more and 30 ms or less; and
a process of starting cooling within 2 s from completion of the laminating, and cooling until a surface temperature of the first resin coating layer is (Tg - 20) °C or more and Tg °C or less.
